# EUROPÄISCHE PATENTANMELDUNG

(11) **EP 3 035 614 A1**
(43) Veröffentlichungstag der Anmeldung: **22.06.2016**
(21) Anmeldenummer: 14198220.7
(22) Anmeldetag: 16.12.2014
(51) Int. Cl.: H04L 12/751, H04L 29/08, G05B 19/04, H04L 12/715

(54) **Verfahren zum Konfigurieren von Routen in einem industriellen Automatisierungsnetzwerk**

(71) Anmelder: Siemens Aktiengesellschaft, 80333 München (DE)
(72) Erfinder: Albrecht, Harald, 90475 Nürnberg (DE)

(57) **Zusammenfassung**

Die Erfindung betrifft ein Verfahren zum Konfigurieren von Routen in einem industriellen Automatisierungsnetzwerk, das ein erstes, IP-basiertes Subnetz (101), an das zumindest ein erster Netzwerkteilnehmer (111, 112) angeschlossen ist, sowie zumindest ein zweites, IP-basiertes Subnetz (102), an das zumindest ein zweiter Netzwerkteilnehmer (122) angeschlossen ist, umfasst. Ein Router (121) koppelt das erste Subnetz (101) mit dem zumindest einen zweiten Subnetz (102), so dass über den Router (121) zwischen dem zumindest einen ersten Netzwerkteilnehmer (111, 112) und dem zumindest einen zweiten Netzwerkteilnehmer (122) Daten austauschbar sind. Auf dem zumindest einen ersten Netzwerkteilnehmer (111, 122) und dem Router (121) wird jeweils ein Mittel (200) zum konfigurationslosen Erkennen von lokalen Diensten eingerichtet. Ferner wird auf dem Router (121) eine lokale Dienstebeschreibung (201) eingerichtet, die eine Information von aus dem ersten Subnetz (101) erreichbaren zweiten Subnetzen (102) in Form einer Dienstebeschreibung umfasst. Zum Ermitteln einer Route von dem zumindest einen ersten Netzwerkteilnehmer (111, 112) des ersten Subnetzes (101) über den Router (121) zu einem der zweiten Netzwerkteilnehmer (122) eines der zweiten Subnetze (102) werden durch das Mittel (200) zum konfigurationslosen Erkennen von lokalen Diensten aus der Dienstebeschreibung die verfügbaren Routen in das zweite Subnetz (102) ermittelt und zur zukünftigen Verwendung in dem zumindest einen ersten Netzwerkteilnehmer (111, 112) gespeichert.

## Beschreibung

Die Erfindung betrifft ein Verfahren zum Konfigurieren von Routen in einem industriellen Automatisierungsnetzwerk. Das Automatisierungsnetzwerk umfasst ein erstes, IP-basiertes Subnetz, an das zumindest ein erster Netzwerkteilnehmer angeschlossen ist, sowie zumindest ein zweites, IP-basiertes Subnetz, an das zumindest ein zweiter Netzwerkteilnehmer angeschlossen ist. Ein Router des Automatisierungsnetzwerks koppelt das erste Subnetz mit dem zumindest einem zweiten Subnetz, so dass über den Router zwischen dem zumindest einen ersten Netzwerkteilnehmer und dem zumindest einen zweiten Netzwerkteilnehmer Daten austauschbar sind.

Bei Automatisierungsnetzwerken der oben genannten Art besteht das Erfordernis, diese kostengünstig, schnell und einfach aufbauen zu können. Ein Automatisierungsnetzwerk besteht aus miteinander gekoppelten, segmentierten Subnetzen. Ein Routing erfolgt beispielsweise über eine sog. Speicherprogrammierbare Steuerung, SPS (englisch: Programmable Logic Controller, PLC).

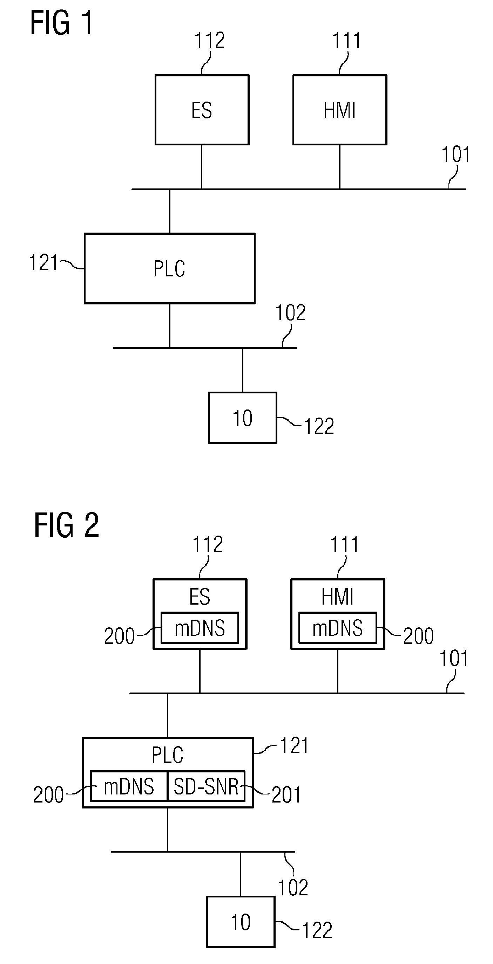

Wie in Fig. 1 dargestellt, umfasst eine SPS 121 mit Routingfunktionalität zwei Anschlüsse für ein erstes Subnetz 101 und ein zweites Subnetz 102. An das zweite Subnetz 102 sind ein oder mehrere dezentrale Netzwerkteilnehmer 122 (sog. EA-Baugruppen und/oder Feldgeräte) angeschlossen. An dem ersten, davon getrennten Subnetz 101 sind beispielsweise ein Bedienrechner 111 (Human Machine Interface, HMI) und ein Programmierrechner 112 (Engineering System, ES) als Netzwerkteilnehmer für Diagnose- und Änderungsaufgaben angeschlossen. In der Praxis kann die Topologie eines solchen Automatisierungsnetzwerks bedeutend komplexer sein. Insbesondere können an das erste Subnetz 101 mehrere SPS bzw. Router 121 mit jeweils zumindest einem daran angeschlossenen zweiten Subnetz angeschlossen sein. Darüber hinaus ist es auch möglich, dass auch an dem ersten Subnetz ein oder mehrere dezentrale EA-Baugruppen und Feldgeräte angeschlossen sind.

Aufgrund der großen Verbreitung IP-basierter Netzwerke besteht nunmehr auch bei Automatisierungsnetzwerken das Erfordernis, sowohl das erste Subnetz als auch das zweite Subnetz 102 als IP-Netze auszulegen und zwischen den beiden Subnetzen 101, 102 IP-basierten Datenverkehr über den Router 121 zu leiten (zu routen). Dies hat zur Folge, dass der Netzwerkteilnehmer 111 eine IP-Router-Funktionalität aufweisen muss, um das Vorsehen eines gesonderten Routers zwischen den beiden IP-Subnetzen zu vermeiden. Ein gesonderter Router ist in Automatisierungsnetzwerken aufgrund des Erfordernisses, diese möglichst kostengünstig im Hinblick auf Hardware, Software und Kosten für die Wartung auszulegen, unerwünscht.

Nachdem in dem in Fig. 1 gezeigten Ausführungsbeispiel kein gesonderter Router existiert, fehlt jedoch den an dem ersten Subnetz 101 angeschlossenen Netzwerkteilnehmern ebenso wie eventuell weiter vorhandenen Routern das erforderliche Wissen über Routen, dass das zweite Subnetz 102 überhaupt existiert und über die SPS bzw. den Router 121 erreichbar ist. Ohne weitere Maßnahmen sind damit für die Netzwerkteilnehmer 111, 112 die Netzwerkteilnehmer 122 per IP nicht erreichbar. Die Netzwerkteilnehmer 111, 112 des ersten Subnetzes 101 haben nämlich kein Wissen darüber, wohin IP-Telegramme für das zweite Subnetz 102 übertragen werden müssen.

Die oben bereits beschriebene Alternative, einen eigenständigen IP-Router einzusetzen und zu konfigurieren, ist sowohl aus Kostengründen als auch aus Sicherheitsgründen unerwünscht. Wird der gesamte Datenverkehr über einen solchen eigenständigen IP-Router geleitet, so kann im Falle einer Fehlfunktion das gesamte Automatisierungsnetzwerk von einem Fehler betroffen sein.

Es ist daher Aufgabe der vorliegenden Erfindung ein Verfahren anzugeben, welches es erlaubt, IP-Datenverkehr auf einfachere Weise zwischen einem ersten Subnetz eines Automatisierungsnetzwerks und einem zweiten Subnetz des Automatisierungsnetzwerks zu leiten, ohne dass dazu Benutzer die notwendigen Routen manuell oder per Planungswerkzeug einrichten müssen.

Diese Aufgabe wird gelöst durch ein Verfahren gemäß den Merkmalen des Patentanspruchs 1. Vorteilhafte Ausgestaltungen ergeben sich aus den abhängigen Patentansprüchen.

Es wird ein Verfahren zum automatischen Konfigurieren von Routen in einem industriellen Automatisierungsnetzwerk vorgeschlagen. Das Automatisierungsnetzwerk umfasst ein erstes, IP-basiertes Subnetz, an das zumindest ein erster Netzwerkteilnehmer angeschlossen ist, sowie zumindest ein zweites IP-basiertes Subnetz, an das zumindest ein zweiter Netzwerkteilnehmer angeschlossen ist. Ein Router des industriellen Automatisierungsnetzwerks koppelt das erste Subnetz mit dem zumindest einen zweiten Subnetz, so dass über den Router zwischen dem zumindest einen ersten Netzwerkteilnehmer und dem zumindest einen zweiten Netzwerkteilnehmer Daten austauschbar sind. Der Router ist z.B. in Gestalt einer Speicherprogrammierbaren Steuerung, SPS, ausgebildet.

Bei dem Verfahren wird gemäß einem Schritt a) auf dem zumindest einen ersten Netzwerkteilnehmer und dem Router jeweils ein Mittel zum konfigurationslosen Erkennen von lokalen Diensten eingerichtet. Gemäß einem Schritt b) wird auf dem Router eine lokale Dienstebeschreibung eingerichtet, die eine Information von aus dem ersten Subnetz erreichbaren zweiten Subnetzen in Form einer Dienstebeschreibung umfasst. Gemäß Schritt c) werden zum Ermitteln einer Route von dem zumindest einen ersten Netzwerkteilnehmer des ersten Subnetzes über den Router zu einem der zweiten Netzwerkteilnehmer eines der zweiten Subnetze durch das Mittel zum konfigationslosen Erkennen von lokalen Diensten aus der Dienstebeschreibung die verfügbaren Routen in das zweite Subnetz ermittelt und zur zukünftigen Verwendung in dem zumindest einen Bedienrechner gespeichert.

Das vorliegende Verfahren nutzt beispielsweise einen bereits existierenden Mechanismus für das konfigurationslose Erkennen von lokalen Diensten, wie beispielsweise einem Druckdienst. Im Unterschied zu den existierenden Mechanismen erfolgt hier eine Beschreibung von erreichbaren Subnetzen in Form von Dienstebeschreibungen.

Durch die Nutzung eines solchen existierenden Mechanismus für das konfigurationslose Erkennen von lokalen Diensten ist kein manuelles (Nach-)Konfigurieren von Routen in den verschiedenen Komponenten (Netzwerkteilnehmer und/oder weiteren Routern) des industriellen Automatisierungsnetzwerks erforderlich. Ebenso kann auf jegliches Projektwissen in den Komponenten verzichtet werden. Das Verfahren erlaubt es, Ist-Routen anhand einer momentan aktuellen Konfiguration automatisch nachzuführen, wodurch das Verfahren insbesondere für Automatisierungsnetzwerke im Serienmaschinenbau geeignet ist. Das Verfahren erfordert darüber hinaus keine Änderungen an existierenden Anwendungen. Das Nachführen von Routen erfolgt auf der Ebene der Komponenten, wobei Adressen von Kommunikationsendpunkten jedoch hiervon unberührt bleiben. Die Mittel zum konfigurationslosen Erkennen von lokalen Diensten können durch eine etablierte Technologiebasis bereitgestellt werden, welche rückwirkungsfrei auf eine Beschreibung von Subnetzen erweitert wird.

Als Mittel zum konfigurationslosen Erkennen von lokalen Diensten kann beispielsweise multicast DNS (multicast Domain Name System, mDNS) genutzt werden.

Die Beschreibung der Information von aus dem ersten Subnetz erreichbaren zweiten Subnetzen kann in einem standardisierten Rahmen erfolgen, der von dem Mittel zum konfigurationslosen Erkennen von lokalen Diensten verarbeitet wird. Auf diese Weise ist es lediglich erforderlich, die von bekannten Mechanismen erforderlichen Funktionen in den ersten Netzwerkteilnehmern des ersten Subnetzes und in dem Router vorzusehen und die Dienstebeschreibung inhaltlich derart anzupassen, dass diese die für die Routenkonfiguration erforderlichen Informationen umfasst.

Zweckmäßigerweise ist für jedes zweite Subnetz zumindest ein Rahmen als Information in der lokalen Dienstebeschreibung gespeichert.

In einer weiteren Ausgestaltung repräsentiert jede Information einen Eintrag in der lokalen Dienstebeschreibung des lokalen Dienstes. Jeder Eintrag stellt somit eine Information über eine Route zu einem bestimmten zweiten Subnetz oder einem bestimmten logischen Segment eines zweiten Subnetzes dar.

Die Information des oder der aus dem ersten Subnetz erreichbaren zweiten Subnetze kann durch den Router aus einer ihm bekannten Routing-Tabelle abgeleitet bzw. erzeugt werden. Insbesondere werden als Information nur solche Routen veröffentlicht, die über den Router in das zumindest eine zweite Subnetz führen.

Gemäß einer weiteren zweckmäßigen Ausgestaltung wird zum Ermitteln einer Route von dem zumindest einen ersten Netzwerkteilnehmer des ersten Subnetzes eine Routen-Anfrage initiiert, die durch sein Mittel zum konfigurationslosen Erkennen von lokalen Diensten an das Mittel zum konfigurationslosen Erkennen von lokalen Diensten des Routers übertragen wird, durch die die in der lokalen Dienstebeschreibung enthaltenen Informationen ausgelesen und in einer Routen-Antwort an den zumindest einen ersten Netzwerkteilnehmer übertragen werden. Durch diesen Informationsaustausch können die zur Bestimmung einer Route erforderlichen Informationen auf einfache Weise automatisch von dem Router abgefragt werden.

Zweckmäßigerweise wird zum Ermitteln einer Route von dem zumindest einen ersten Netzwerkteilnehmer eines ersten Subnetzes aus den in der Routen-Antwort enthaltenen Informationen in Gestalt der Dienstebeschreibung ein Verweis zu dem Router erzeugt. Die jeweiligen Routen können in einem IP-Stack des zumindest einen Bedienrechners gespeichert werden. Die Nutzung der in dem IP-Stack enthaltenen Daten kann in der üblichen Weise der Komponente (d.h. den ersten Netzwerkteilnehmern und/oder weiteren Routern) des ersten Subnetzes erfolgen.

Eine jeweilige Information über eine verfügbare Route kann gemäß einer weiteren Ausgestaltung in einer Informationseinheit des Multicast Domain Name Systems (mDNS) gespeichert sein. Hierzu können insbesondere sog. Resource Records, insbesondere sog. TXT Resource Records, genutzt werden. Als Information in der Informationseinheit können eine IP-Adresse sowie eine Länge der Subnetzmaske des zweiten Subnetzes und eine IP-Adresse des Routers gespeichert werden. Diese Informationen sind ausreichend, um eine Route von einer Komponente des ersten Subnetzes zu einer Komponente des zweiten Subnetzes zu konfigurieren.

Die Erfindung wird nachfolgend näher anhand eines Ausführungsbeispiels in der Zeichnung näher erläutert. Es zeigen:
- Fig. 1: eine schematische Darstellung eines herkömmlichen industriellen Automatisierungsnetzwerks;
- Fig. 2: eine schematische Darstellung eines erfindungsgemäß eingerichteten industriellen Automatisierungsnetzwerk;
- Fig. 3: eine schematische Darstellung einer erfindungsgemäß mit einem ersten Subnetz des Automatisierungsnetzwerks gekoppelten Netzwerkteilnehmer;
- Fig. 4: eine schematische Darstellung der Ausgestaltung eines erfindungsgemäß eingerichteten Routers, welcher ein erstes IP-basiertes Subnetz mit einem zweiten, davon getrennten, IP-basierten Subnetz koppelt;
- Fig. 5: eine schematische Darstellung einer Informationseinheit, in der Informationen für die Konfiguration einer Route in Gestalt einer Dienstebeschreibung einspeicherbar sind;
- Fig. 6: eine schematische Darstellung einer Informationseinheit, in der für die Konfiguration einer Route erforderliche Informationen in einer Dienstebeschreibung enthalten sind; und
- Fig. 7: eine beispielhafte Darstellung zweier mit einem ersten Subnetz gekoppelter Router, welche jeweils mit einem zweiten Subnetz mit unterschiedlichen Adressen gekoppelt sind.

Fig. 2 zeigt das in Verbindung mit Fig. 1 bereits beschriebene industrielle Automatisierungsnetzwerk, dessen Topologie gegenüber Fig. 1 unverändert ist. Das industrielle Automatisierungsnetzwerk umfasst somit einen Router 121 in Gestalt einer speicherprogrammierbaren Steuerung, SPS (englisch: Programmable Logic Controler, PLC) mit zwei Anschlüssen. An einen ersten Anschluss ist ein erstes, IP-basiertes Subnetz 101 angeschlossen. An einen zweiten Anschluss ist ein zweites, IP-basiertes zweites Subnetz 102 angeschlossen. An das erste Subnetz 101 sind lediglich beispielhaft als erste Netzwerkteilnehmer ein Bedienrechner 111 in Gestalt einer Mensch-Maschine-Schnittstelle, MMI (Human Machine Interface, HMI) sowie ein Programmierrechner 112 in Gestalt einer sog. Engineering Station, ES angeschlossen. Darüber hinaus könnten auch weitere Komponenten, wie z.B. ein Feldgerät und/oder weitere Bedien- und/oder Programmierrechner angeschlossen sein. An das zweite Subnetz 102 ist beispielhaft lediglich eine Komponente in Gestalt einer dezentralen Eingabe/Ausgabe(EA)-Baugruppe (englisch: Input/Output-Device, IO-Device) als zweiter Netzwerkteilnehmer angeschlossen. In der Praxis kann eine Vielzahl solcher EA-Baugruppen an das zweite Subnetz 102 angeschlossen sein. Als weitere Netzwerkteilnehmer kann darüber hinaus eine Anzahl an Feldgeräten angeschlossen sein.

Der Bedienrechner 111, der Programmierrechner 112 sowie der Router 121 sind mit einem an sich bekannten Mittel 200 für das konfigurationslose Erkennen von lokalen Diensten ausgestattet. Dieses Mittel 200 kann beispielsweise in Gestalt eines multicast DNS-Peers (mDNS-Peer) ausgestaltet sein, der das mDNS-Protokoll implementiert. Ferner ist in dem Router 121 eine Dienstebeschreibung 201 (eine sog. Service Description Subnet Route, SD-SNR) hinterlegt. Die Dienstebeschreibung 201 definiert nun nicht, wie bei mDNS üblich, einen Kommunikationsendpunkt für einen Dienst, wie z.B. eine IP-Adresse, einen Port oder ein Transportprotokoll, sondern beschreibt stattdessen die von dem Bedienrechner 111 oder dem Programmierrechner 112 des ersten Subnetzes 101 aus erreichbaren Subnetze, hier das Subnetz 102. In der Dienstebeschreibung 201 des Routers 121 sind dabei nur die über diesen Router 121 erreichbaren zweiten Subnetze enthalten.

Die nachfolgend näher beschriebene Dienstebeschreibung kann mit Hilfe von standarisierten Rahmen für das Auffinden und Beschreiben von Diensten DNS-SD erfolgen, wobei entsprechende Informationen aus einer in dem Router 121 enthaltenen Routing-Tabelle abgeleitet werden kann. Die Routing-Tabelle kann ihrerseits direkt aus der Konfiguration der beiden IP-Schnittstellen, d.h. der Schnittstellen zu dem ersten und dem zweiten Subnetz 101, 102 des Routers 121 bestimmt werden.

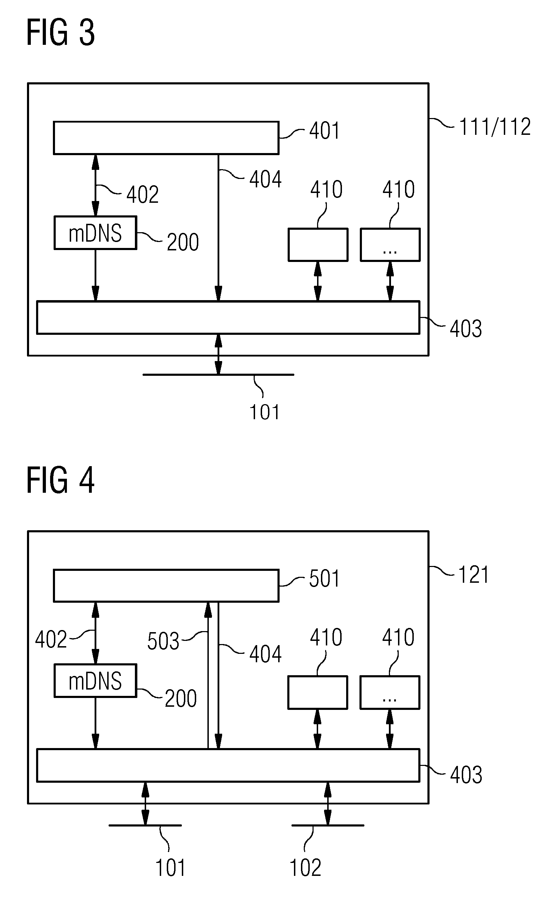

Fig. 3 zeigt in einer Darstellung den erfindungsgemäß modifizierten Bedienrechner 111 bzw. Programmierrechner 112. Diese weisen mit den nachfolgend beschriebenen Komponenten die Fähigkeit des Erkennens von Subnetzen auf. Der Bedienrechner 111 bzw. Programmierrechner 112 weist in bekannter Weise einen IP-Stack 403 auf. Daneben besitzt er den bereits erwähnten mDNS-Peer 200, der das mDNS-Protokoll implementiert. Mit dem Bezugszeichen 401 ist ein sog. SD-SNR Client (Service Description-Subnet Route Client) bezeichnet, der durch entsprechende Anfragen 402 an den mDNS-Peer 200 nach Informationseinheiten für Subnetz-Routen sucht.

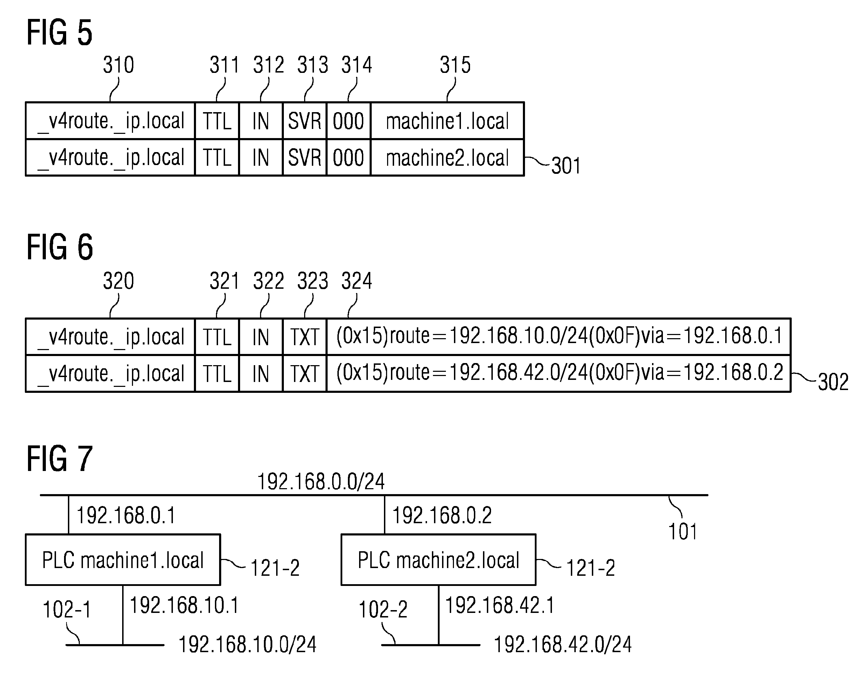

Derartige Informationseinheiten in Gestalt bekannter Resource Records (RR) sind exemplarisch in den Fig. 5 und 6 dargestellt. Die Beschreibung der verfügbaren Routen in ein Subnetz des industriellen Automatisierungsnetzwerks erfolgt in Form dieser Resource Records. Während das Beschreiben von Diensten mittels sog. SVR-Resource Records (vergl. Fig. 5) und sog. TXT-Resource Records (Fig. 6) bekannt ist, werden gemäß der Erfindung insbesondere die TXT-Resource Records genutzt, um Routen in Subnetze zu beschreiben.

Mit den Informationen über Routen und Subnetze aus diesen Antworten (Bezugszeichen 404) erzeugt oder löscht der SD-SNR Client 401 entsprechende Routen 404 des IP-Stacks 403. Auf diese Weise werden beispielsweise in dem Bedienrechner 111 bzw. in dem Programmierrechner 112 enthaltene Applikationen 410 davon entbunden, entsprechendes Wissen über Routen selbst aufweisen zu müssen. Stattdessen können die Applikationen 410 auf den IP-Stack 403 zugreifen. Das beschriebene Vorgehen macht darüber hinaus die manuelle Pflege von Routen entbehrlich.

Eine beispielhafte Realisierung des Routers 121 ist in Fig. 4 dargestellt. Der in Fig. 4 dargestellte Router 121 weist die Fähigkeit des Erkennens anderer Subnetze als auch das Bekanntgeben eigener Subnetze auf. Der Router 121 ist in bekannter Weise mit einem IP-Stack 403 ausgestattet, der entsprechende Anfragen 402 an den mDNS-Peer 200 nach Informationseinheiten für Subnetz-Routen richtet. Darüber hinaus umfasst er den mDNS-Peer 200, der das mDNS-Protokoll implementiert. Ein SD-SNR Server Client 501 umfasst neben der zuvor beschriebenen Funktion des SD-SNR Clients 401 zusätzlich eine Serverkomponente, die Informationen (Bezugszeichen 503) über lokal angeschlossene Subnetze des IP-Stacks 403 in TXT-Resource Records aufbereitet und über den mDNS-Peer 200 im Netzwerk dem Bedienrechner 111 und dem Programmierrechner 112, d.h. deren mDNS-Peers 200, zur Verfügung stellt. Darüber hinaus können wiederum eine oder mehrere Applikationen 410 in dem Router 121 vorgesehen sein. Wie zuvor sind diese von der Konfiguration von Subnetzen entkoppelt.

Bezug nehmend auf die Fig. 5 bis 7 wird nun der Aufbau der Resource Records beschrieben.

Es ist allgemein vorgesehen, dass die Beschreibung der verfügbaren Routen in jeweilige zweite Subnetze in Form sog. Resource Records erfolgt. Grundsätzlich ist das Beschreiben von Diensten mittels sog. SVR und TXT Resource Records möglich. Bevorzugt ist die Beschreibung in TXT Resource Records.

Fig. 5 zeigt den Aufbau einer bekannten SVR Resource Records. Dargestellt sind zwei SVR Resource Records mit jeweils gleichen Feldern. In einem ersten Feld 310 wird der neue "Dienst" durch einen Namen, hier: "_v4route" definiert. Ebenso ist parallel die Anwendung auf IPv6 mit dem Namen "_v6route" möglich. Da es sich um einen gleichwertigen Dienst handelt, von dem viele Instanzen existieren, nämlich potentiell soviele wie es unterschiedlich zweite Subnetze in dem industriellen Automatisierungsnetzwerk gibt, orientiert sich der vollständige Dienste-Domainname an den RFC-Regeln. Entsprechend diesen Regeln lautet der Dienste-Domainname im Feld 310 "_v4route._ip.local". Die Endung ".local" kommt daher, dass der Mechanismus mDNS mit seinem eigenen, lokalen Namensraum benutzt werden soll. Die Felder 311 ("TTL"), 312 ("IN") und 314 ("000") sind für das vorliegende Verfahren ohne Bedeutung und entsprechen dem standarisierten Rahmen von mDNS. Im Feld 313 ist die Information "SVR" enthalten, die angibt, dass es sich hier um eine SVR Route Record 301 handelt. Das Feld 315 verweist auf einen bestimmten Router 121-1 oder 121-2 durch Angabe seines Namens "machine1.local" bzw. "machine2.local". Ebenso ist denkbar, anstatt der Domain "local" auch eine andere Domain zu verwenden.

Die Beschreibung der konkreten Subnetze und der Routen dorthin erfolgt, wie beschrieben, mit Hilfe von TXT Resource Records 302, von denen beispielhaft zwei in Fig. 6 dargestellt sind. Der Aufbau dieser TXT Resource Records entspricht dem Standard von mDNS. Verändert gegenüber der herkömmlichen Information ist der Inhalt dieser TXT Resource Records. So wird hier im Feld 324 sowohl das Subnetz ("route") als auch die IP-Adresse des Routers ("via") angegeben, über den das Subnetz erreicht werden kann. Das Subnetz wird in typischer Notation als IP-Adresse und Länge der Subnetzmaske angegeben. Ebenso wird die Routeradresse in gängiger IP-Notation hinterlegt.

Entsprechend der beispielhaften Darstellung des in Fig. 7 gezeigten, alternativen Automatisierungsnetzwerks, bei dem an das erste Subnetz 101 zwei Router 121-1, 121-2 angeschlossen sind, wobei an einen jeweiligen Router 121-1, 121-2 ein jeweiliges zweites Subnetz 102-1, 102-2 angeschlossen ist, verweist ein TXT Resource Record 302 auf den Router 121-1 und die zweite TXT Resource Record auf den Router 121-2. Das Feld 320 gibt den vollständigen Dienste-Domainnamen an, wie dieser in Verbindung mit Fig. 5 beschrieben wurde. Die Felder 321 "TTL", 322 "IN" und 323 "TXT" entsprechen der üblichen Notation, wobei Feld 323 angibt, dass TXT Resource Records vorliegen.

Neben den zentralen TXT Resource Records können optional auch SVR Resource Records 301 in einem jeweiligen Router 121 hinterlegt sein. Diese sind für die eigentliche Funktion der Routenkonfiguration nicht zwingend notwendig und dienen der Kompatibilität existierender DNS/mDNS-Software zur Service Discovery. Die SVR Resource Records 301 listen die einzelnen Routerinstanzen auf (vergl. Feld 315), können jedoch keine Information über Subnetze liefern.

Durch das beschriebene Vorgehen benötigen die an das erste Subnetz angeschlossenen Komponenten (hier: der Bedienrechner 111 und der Programmierrechner 112) kein Projektwissen mehr. Stattdessen sind diese Geräte mDNS-Teilnehmer, die im lokalen Subnetz (hier: erstes Subnetz 101) mittels multicast nach Subnetz-Router-Diensten anfragen. Daraufhin antworten die verfügbaren Subnetz-Router (d.h. im Ausführungsbeispiel gemäß Fig. 2: der Router 121 und im Ausführungsbeispiel gemäß Fig. 7: die Router 121-1 und 121-2). Aufgrund der zurückgemeldeten Subnetz-Dienstebeschreibungen kann eine anfragende Komponente nun lokal im IP-Stack ihre Routen-Tabelle so erweitern bzw. anpassen, dass an einen zweiten Netzwerkteilnehmer des zweiten Subnetzes 102 zu übertragende Daten korrekt über den zugeordneten Router 121 geleitet werden.

Damit können dann Applikationen auf den Netzwerkteilnehmern 111, 112 des ersten Subnetzes 101 ohne weiteres Zutun auf Netzwerkteilnehmer 121 des zweiten Subnetzes 102 zugreifen, sobald sie deren Adressen kennen. Die Adressen werden dabei, wie beschrieben, mit Hilfe eines Namensdienstes, wie DNS oder mDNS, ermittelt.

## Patentansprüche

1. Verfahren zum Konfigurieren von Routen in einem industriellen Automatisierungsnetzwerk, das
- ein erstes, IP-basiertes Subnetz (101), an das zumindest ein erster Netzwerkteilnehmer (111, 112) angeschlossen ist;
- zumindest ein zweites, IP-basiertes Subnetz (102), an das zumindest ein zweiter Netzwerkteilnehmer (122) angeschlossen ist; und
- einen Router (121), der das erste Subnetz (101) mit dem zumindest einen zweiten Subnetz (102) koppelt, so dass über den Router (121) zwischen dem zumindest einen ersten Netzwerkteilnehmer (111, 112) und dem zumindest einen zweiten Netzwerkteilnehmer (122) Daten austauschbar sind;
umfasst, bei dem
a) auf dem zumindest einen ersten Netzwerkteilnehmer (111, 122) und dem Router (121) jeweils ein Mittel (200) zum konfigurationslosen Erkennen von lokalen Diensten eingerichtet wird;
b) auf dem Router (121) eine lokale Dienstebeschreibung (201) eingerichtet wird, die eine Information von aus dem ersten Subnetz (101) erreichbaren zweiten Subnetzen (102) in Form einer Dienstebeschreibung umfasst;
c) zum Ermitteln einer Route von dem zumindest einen ersten Netzwerkteilnehmer (111, 112) des ersten Subnetzes (101) über den Router (121) zu einem der zweiten Netzwerkteilnehmer (122) eines der zweiten Subnetze (102) durch das Mittel (200) zum konfigurationslosen Erkennen von lokalen Diensten aus der Dienstebeschreibung die verfügbaren Routen in das zweite Subnetz (102) ermittelt werden und zur zukünftigen Verwendung in dem zumindest einen ersten Netzwerkteilnehmer (111, 112) gespeichert werden.

2. Verfahren nach Anspruch 1, bei dem als Mittel (200) zum konfigurationslosen Erkennen von lokalen Diensten Multicast DNS (mDNS) genutzt wird.

3. Verfahren nach Anspruch 1 oder 2, bei dem die Beschreibung der Information von aus dem ersten Subnetz (101) erreichbaren zweiten Subnetzen (102) in einem standardisierten Rahmen erfolgt, der von dem Mittel (200) zum konfigurationslosen Erkennen von lokalen Diensten verarbeitet wird.

4. Verfahren nach Anspruch 3, bei dem für jedes zweite Subnetz (102) zumindest ein Rahmen als Information in der lokalen Dienstebeschreibung (201) gespeichert ist.

5. Verfahren nach einem der vorhergehenden Ansprüche, bei dem jede Information einen Eintrag in der lokalen Dienstebeschreibung (201) des lokalen Diensts repräsentiert.

6. Verfahren nach einem der vorhergehenden Ansprüche, bei dem die Information des oder der aus dem ersten Subnetz (101) erreichbaren zweiten Subnetze (102) durch den Router (121) aus einer ihm bekannten Routing-Tabelle abgeleitet/erzeugt wird.

7. Verfahren nach Anspruch 6, bei dem als Information nur solche Routen veröffentlicht werden, die über den Router (121) in das zumindest eine zweite Subnetz (102) führen.

8. Verfahren nach einem der vorhergehenden Ansprüche, bei dem zum Ermitteln einer Route von dem zumindest einen ersten Netzwerkteilnehmer (111, 112) des ersten Subnetzes (101) eine Routen-Anfrage (402) initiiert wird, die durch sein Mittel (200) zum konfigurationslosen Erkennen von lokalen Diensten an das Mittel (200) zum konfigurationslosen Erkennen von lokalen Diensten des Routers (121) übertragen wird, durch die die in der lokalen Dienstebeschreibung (201) enthaltenen Informationen ausgelesen und in einer Routen-Antwort an den zumindest einen ersten Netzwerkteilnehmer (111, 112) übertragen werden.

9. Verfahren nach Anspruch 8, bei dem zum Ermitteln einer Route von dem zumindest einen ersten Netzwerkteilnehmer (111, 112) des ersten Subnetzes (101) aus den in der Routen-Antwort enthaltenen Informationen in Gestalt der Dienstebeschreibung ein Verweis zu dem Router (121) erzeugt wird.

10. Verfahren nach Anspruch 9, bei dem die jeweiligen Routen in einem IP-Stack des zumindest einen ersten Netzwerkteilnehmer (111, 112) gespeichert werden.

11. Verfahren nach einem der vorhergehenden Ansprüche, bei dem eine jeweilige Information über eine verfügbare Route in einer Informationseinheit des Multicast Domain Name Systems (mDNS) gespeichert ist.

12. Verfahren nach Anspruch 11, bei dem als Information in der Informationseinheit eine IP-Adresse sowie eine Länge der Subnetzmaske des zweiten Subnetzes (102) und eine IP-Adresse des Routers (121) gespeichert werden.
